# EUROPEAN PATENT SPECIFICATION

(11) **EP 3 894 290 B1**
(45) Date of publication and mention of the grant of the patent: **07.12.2022**
(21) Application number: 19831626.7
(22) Date of filing: 13.12.2019
(51) Int. Cl.: B60T 13/10

(54) **HYDRAULIC BRAKING ARRANGEMENT FOR OFF-ROAD VEHICLES**
HYDRAULISCHE BREMSANORDNUNG FÜR GELÄNDEFAHRZEUGE
AGENCEMENT DES FREINS HYDRAULIQUES POUR VÉHICULE TOUT TERRAIN

(30) Priority: 14.12.2018 IT 201800011116
(43) Date of publication of application: 20.10.2021
(73) Proprietor: CNH Industrial Italia S.p.A., 10135 Turin (IT)
(72) Inventor: FORTE, Michelantonio, 41100 Modena (IT); DIGESU, Pasquale, 41124 Modena (IT)
(74) Representative: CNH Industrial IP Department
(86) International application number: PCT/EP2019/085079
(87) International publication number: WO 2020/120738

(56) References cited:
- EP-A2- 2 256 011
- WO-A1-90/06876
- CN-B- 106 802 650
- CN-U- 204 870 981
- GB-A- 2 032 029
- GB-A- 2 213 890
- JP-A- H04 314 661

## Description

### TECHNICAL FIELD

The present invention concerns a hydraulic braking arrangement for off-road vehicles, in particular an electromechanical hydraulic arrangement for agricultural vehicles.

### BACKGROUND OF THE INVENTION

Off-road vehicles, such as agricultural vehicles, needs more and more implementations to allow these latter to be moved efficiently in the entire possible range of work velocities of the vehicle.

Indeed, agricultural vehicles are constantly increasing their speed during road movement above 50 km/h. Therefore, actual off-road vehicles, because of their weight and power, needs improved hydraulic braking circuits configured to guarantee an acceptable service braking of the vehicle both on rear and front wheels. For example CN204870981 discloses a brake system using compressed air.

Present braking arrangement of agricultural vehicles foresees presence of brake disks on front axle that contributes only to about 15% of the total braking force of the vehicle; indeed the majority of braking force is exerted by rear brakes.

Moreover, it is increasingly requested that front and rear brakes may be actuated independently and in a fail-safe mode, i.e. in a way that guarantees at least the braking of one axle (rear or front) or a couple of wheels (left rear and right front or viceversa).

In view of the above, it is necessary to allow braking of off-road vehicles in a wide range of working velocities of the vehicle, while containing costs.

An aim of the present invention is to satisfy the above mentioned needs in a cost- effective and optimized way.

### SUMMARY OF THE INVENTION

The aforementioned aim is reached by a hydraulic braking arrangement as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a hydraulic scheme of the hydraulic braking arrangement according a first embodiment of the invention; and
- Figure 2 is a hydraulic scheme of the hydraulic braking arrangement according a second embodiment of the invention

### DETAILED DESCRIPTION OF THE INVENTION

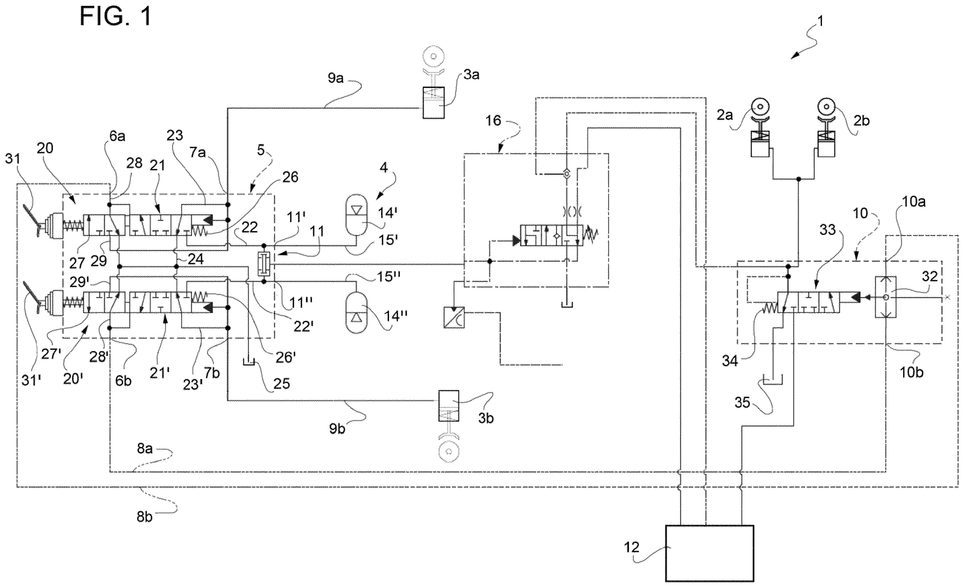

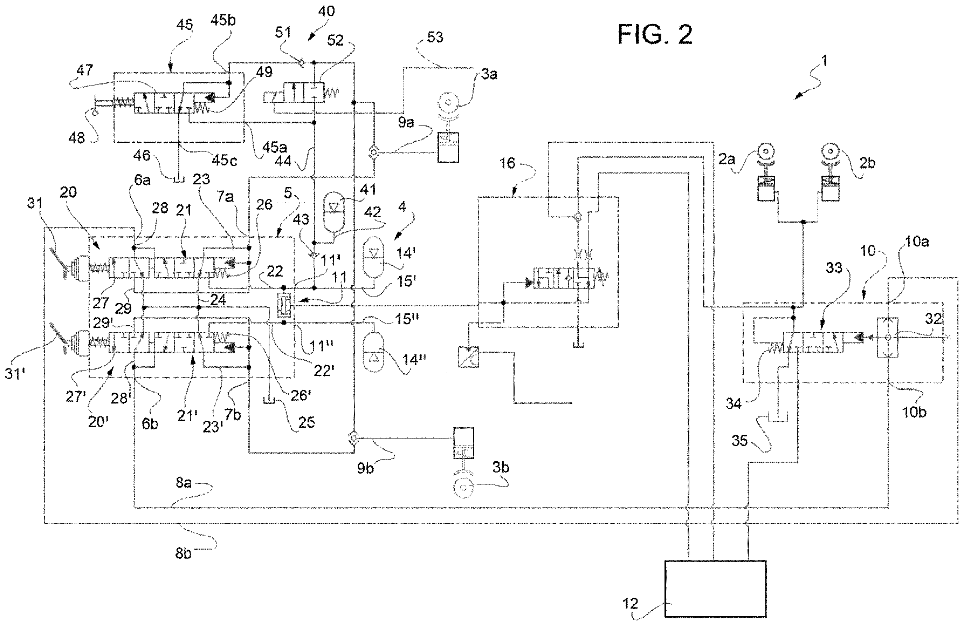

Figures 1 and 2 disclose a hydraulic braking arrangement 1 for a work vehicle comprising a pair of front brakes 2 and rear brakes 3, in particular a right and left front brakes 2a, 2b and right and left rear brakes 3a, 3b.

According to an aspect of the invention hydraulic braking arrangement 1 further comprises a power brake valve 5 fluidly interposed between a source 4 of fluid in pressure and rear brakes 3. Power brake valve 5 is configured to receive the fluid at a predefined pressure level from source 4 and to allow the passage of such fluid to rear brakes 3 at pressure level which is substantially the same of the aforementioned predefined pressure level of source 4.

Preferably, source 4 is configured to provide fluid in pressure, e.g. oil, at a pressure of about 100-120 bar and power brake valve 5 is configured to allows passage of such fluid to rear brakes 3 at the same value, less than pressure drops due to fluid passage in power valve 5 itself.

Power brake valve 5 preferably comprises at least a first opening 7, preferably two openings 7a, 7b fluidly connected to left and right rear brakes 3a, 3b via respective conduits 9a, 9b and at least a third opening 11 fluidly connected to source 4, as further described below.

According to a further aspect of the invention, power brake valve 5 is further configured to produce at least a hydraulic signal 8a, 8b configured to control a relay valve 10 fluidly interposed between a source of fluid in pressure 12, e.g. coming from pump of the vehicle or a priority valve, and front brakes 2a, 2b, as described in detail in the following. According to the described embodiment, power brake valve 5 generates two hydraulic signals 8a, 8b and comprises a further pair of openings 6a, 6b fluidly connected to relay valve 10.

According to the exemplary disclosed embodiment, source 4 comprises a first and a second accumulators 14', 14" fluidly connected to respective openings 11', 11'' to power brake module 5 via conduits 15', 15". Source 4 further comprises an accumulator charging module 16 configured to keep accumulators 14', 14" in determined working conditions. Accumulator charging module 16 is accordingly connected to source of fluid in pressure 12. Since accumulator charging module 16 is per se known, it will be no more further described in detail.

According to the exemplarily disclosed embodiment, power brake valve 5 comprises a first spool 20 fluidly interposed between source 4, first accumulator 14', and openings 6a, 7a and configured to allow passage of fluid in pressure from first accumulator 14' towards right rear brake 3a.

In particular first spool 20 comprises a first stage 21 defining three ways and three positions, being fluidly connected to opening 11' via a conduit 22, to opening 7a via a conduit 23 and to a discharge 25 via a system of conduits 24.

First spool 20 further comprises a second stage 27, linked to first stage 21, defining three ways and two positions, being fluidly connected to opening 6a via a conduit 28, to conduit 23 via a conduit 29 and to a discharge 25 via the system of conduits 24.

Power brake valve 5 further comprises a second spool 20' fluidly interposed between source 4, second accumulator 14", and openings 6b, 7b and configured to allow passage of fluid in pressure from second accumulator 14" towards left brakes 2b, 3b.

In particular second spool 20' comprises a first stage 21' defining three ways and three positions, being fluidly connected to opening 11" via a conduit 22', to opening 7b via a conduit 23' and to a discharge 25 via a system of conduits 24.

Second spool 20' further comprises a second stage 27' linked to first stage 21', defining three ways and two positions, being fluidly connected to opening 6b via a conduit 28', to conduit 23' via a conduit 29' and to a discharge 25 via the aforementioned system of conduits 24.

Preferably first and second spool 20, 20' are fluidly connected together to discharge 25 via system of conduits 24.

Each spool 20, 20' is actuated by a mechanical control input, e.g. given by a respective pedal 31, 31'in known way.

Spools 20, 20' are configured to assume a first neutral position, maintained by elastic members 26, 26' generating a preset preload in which no fluid from accumulators 14', 14' flows to rear brakes 3 and possible residual fluid of hydraulic signals 8a, 8b flows to discharge 25 and a second position, actuated by pedals 31, 31', which acts against elastic members 26, 26' in which fluid from accumulators 14, 14' flows to rear brakes 3 and hydraulic signals 8a, 8b are generated and flow toward relay valve 10.

As said above, hydraulic signals 8a, 8b flow to relay valve 10 and control this latter to modulate pressure of the fluid coming from the source of fluid in pressure 12 and front brakes 2a, 2b. In particular relay valve 10 regulates the pressure coming from source 12 of a predefined ratio.

In particular, signal 8a, 8b may flow towards openings 6a, 6b and respective openings 10a, 10b of relay valve 10. From openings 6a, 6b signals 8a, 8b converge on a shuttle valve 32 configured, for example a direct shuttle valve, to select the greater between the two signals 8a, 8b. Such greater signal is fluidly connected to a valve 33 so to control its movement against a preload force given by an elastic member 34.

Valve 33 is fluidly interposed between source 12 and front brakes 2a, 2b and a discharge 35 and it is configured to assume a first neutral position, maintained by elastic element 34, in which no fluid may flow from source 12 towards front brakes 2 and a second position, actuated by the greatest between signals 8a, 8b, in which fluid may flow from source 12 towards front brakes 2. Advantageously valve 33 may be a three ways- three position valve and, as said above, hydraulically controlled.

Valve 33 is configured to allow the passage of fluid coming from source 12 to brakes 2a, 2b proportionally to the pressure of signals 8a, 8b. In particular, valve 33 may provide a higher outlet pressure compared with pilot pressure from power brake valve 5 (signals 8a and 8b); this means that the inlet pressure to brakes 2a, 2b coming from source 12 is regulated by a ratio with the pilot signals 8a, 8b.

In particular ratio can be selected/designed in a wide range, from 1:1 to 1:10 or more, according to the max reachable pressure in source 12, and pilot values 8a, 8b. In general for tractor application, ratio is preferably between 1:1 to 1:5 or, more preferably between should be from 1:1 (same pressure) to 1:3 (triple pressure).

In particular, the lower is the pilot on 8a or 8b and higher can be the above mentioned ratio. For sake of example, piloting with signals 8a, 8b at 100 bars (maximum pressure of source 4) and having a source 12 pressure of 200 bars, allows to feed brakes 2a, 2b with a pressure of 100 bars with a ratio 1:1; similarly piloting with signals 8a, 8b at 50 bars (e.g. half of the maximum pressure of source 4) and having a source 12 pressure of 200 bars, allows to feed brakes 2a, 2b with a pressure of 100 bars with a ratio 1:2.

The operation of the above disclosed first embodiment is the following.

When the user presses pedals 31, 31', spools 20, 20' moves against preload given by elastic members 26. In this way, it is allowed passage of fluid from accumulators 14, 14' towards portions 21, 21' and then via conduits 23, 23' to rear brakes 3a, 3b. As said, the pressure imparted to rear brakes 3 is regulated proportionally to the spools 21 and 21' position according to the travel imparted by the driver to the pedals 31 and 31' connected to the spools.

At the same time, part of fluid coming from accumulators 14, 14' flows through portions 27, 27' and generates proportional signals 8a, 8b which fluid into relay valve 10. Here, the bigger of the two signals actuates the movement of valve 33 against preload elastic means 34. Accordingly fluid from source 12 may flow towards front brakes 2 with a defined ratio to the pilot signals 8a and 8b as above mentioned.

When accumulators 14, 14' are discharged, recharging module 16 will allow passage of fluid in pressure from source of fluid 12 via conduits 22 to charge accumulators 14, 14' . In such configuration spools 20, 20' are in neutral position and fluid in pressure coming from source 12 cannot pass to brakes 2, 3 through power valve 5.

Figure 2 discloses a second embodiment of the present invention which is different with respect to the first embodiment of Figure 1 by comprising a secondary brake system 40 configured, inter alia, to allow park brake of the vehicle.

In particular, secondary brake system 40 comprises an accumulator 41 fluidly connected via a conduit 42 to source of fluid 4, in particular in the described embodiment to conduit 22 and then to first accumulator 14'. Preferably a check valve 43 is fluidly interpose on conduit 42 so as to allow passage of fluid only from source 4 to accumulator 41.

Accumulator 41 is further fluidly connected to a first opening 45a of a secondary valve 45 via a conduit 44. Secondary valve 45 further comprises a second opening 45b fluidly connected to conduits 9a and 9b and then to rear brakes 3a, 3b and a third opening 45c fluidly connected to a discharge 46.

Preferably secondary valve 45 comprises a three ways-three positions valve 47 actuated by a mechanical control input, e.g. given by a pedal/lever 48 in known way. Such actuation of valve 45 acts against a force given by an elastic member 49.

Advantageously secondary brake system 40 comprises a check valve 51 fluidly interposed downstream with respect to secondary valve 45 but upstream with respect to conduits 9a, 9b configured to allow passage of fluid only from valve 45 to these latter.

Secondary brake system 40 may further comprises a dump valve 52 fluidly interposed between conduit 44 and on the conduit connecting second openings 45b with conduits 9a, 9b downstream with respect check valve 51 but upstream with respect conduits 9a, 9b. Dump valve 52 is configured to allow direct passage of fluid from conduit 44 towards conduits 9a, 9b without passing through secondary valve 45.

Advantageously bypass valve 52 is a two-ways two-positions ON-OFF valve and electrically actuated thanks to an electric signal 53, e.g. a remote electric signal.

The operation of the above disclosed second embodiment is the following.

The operation of the portion which is already present in the first embodiment is the same. In addition, secondary brake system 40 allows to brake the vehicle via rear brakes 3 even in condition of faults of remaining portion of arrangement 1.

Indeed, if needed, the user may push lever 48 and then move valve 47 into a position in which the fluid contained in accumulator 41 may flow via conduit 44, through valve 47 to conduits 9a, 9b and then to brakes 3a, 3b.

Moreover, for sake of remote control or for sake of security, the same function may be available by using by-pass valve 52. In fact, signal 53 may actuate movement of valve 52 which allows direct passage of fluid from accumulator 41 via conduit 44 to conduits 9a, 9b and then to brakes 3a, 3b.

When accumulator 41 is discharged, recharging module 16 will allows passage of fluid in pressure from source of fluid 12 via conduits 2, check valve 43 and conduit 42 to recharge accumulator 41. In such configuration, also accumulators 14', 14" are recharged and spools 20, 20' are in neutral position as already stated above.

In view of the foregoing, the advantages of a hydraulic braking arrangement 1 according to the invention are apparent.

The overall braking force is increased by increasing in percentage front brakes applied force with respect to rear brakes, due to increased pressure on the front brakes. Consequently braking distance of the vehicle is decreased.

Such increased force is given by the use of calipers which are actuated by a dedicated high pressure source 12, regulated at a defined ratio to front brakes by means of a relay valve 10.

It has further to be noted that pressure source 12 is independent with respect to pressure source 4, therefore they can be set to two different pressure levels suitable for the respective typology of front and rear brakes.

Since the pedal 31 actuated by the user is soft and needs low pressure to move power brake valve 5, comfort is improved and feeling can be adapted with a high range of selection. Indeed, the pedals have not to create braking pressure that is indeed fed by the accumulators, so this makes them smoot and softer, compared to brake pump pedals.

Moreover, there is possibility of redundancy between front and rear brakes 2,3 , i.e. there are two accumulators 14', 14" which can both allows actuation of both brakes 2,3. Further, there is another redundancy in rear brakes thanks to secondary system 40, which allows the braking of the vehicle even if power brake valve 5 faults. Again, in secondary system 40 itself there is a further redundancy, thanks to valve 52, which allows actuation of system 40 even in case valve 47 is fault.

Further, is it possible to remove the parking mechanical brake via solenoid brake valve 47.

Furthermore it is possible to achieve a power zero functionality since thanks to valve 45 it is possible to arrive at zero velocity to park position and then park the vehicle.

It is clear that modifications can be made to the described hydraulic braking system 1 which do not extend beyond the scope of protection defined by the claims.

For sake of example, power brake valve 5 may comprise different portions 21, 27 with respect to the ones disclosed herein and similarly consideration may apply to valve 33 and 47 or recharging module 16 which can be differently constructed.

Further, shuttle valve 32 can be absent or it can be an inverse shuttle valve; again accumulators 14', 14" may be replaced by a single accumulator.

## Claims

1. - Hydraulic braking arrangement (1) for controlling front and rear brakes (2,3) of an off-road vehicle, said arrangement (1) comprising a power brake valve (5) fluidly interposed between said rear brakes (3) and a first source (4) of fluid in pressure of said vehicle and being configured to selectively allow passage of fluid coming from said first source (4) to said rear brakes (3), said power brake valve (5) being further configured to selectively provide at least a hydraulic signal (8a, 8b) configured to control a relay valve (10) fluidly interposed between said front brakes (2) and a second source (12) of fluid in pressure of said vehicle and being configured to selectively allow passage of fluid coming from said second source (12) to said front brakes (2) in function of said at least one hydraulic signal (8a, 8b).

2. - Hydraulic braking arrangement according to claim 1, wherein said relay valve (10) allows the passage of fluid from second source (12) by regulating inlet pressure of such fluid to said front brakes (2) with a predetermined ratio which is proportional to the pressure of said pilot signals (8a, 8b).

3. -Hydraulic braking arrangement according to claim 2, wherein said ratio varies from 1:1 to 1:5.

4. - Hydraulic braking arrangement according to claim 1 to 3, wherein said power brake valve (5) is mechanically actuated.

5. - Hydraulic braking arrangement according to any of the preceding claims, wherein said first source of fluid (4) comprises at least an accumulator (14', 14").

6. - Hydraulic braking arrangement according to claim 5, further comprising a recharging module (16) configured to recharge said at least an accumulator (14', 14'') by fluidly connecting this latter with said second source of fluid in pressure (12).

7. - Hydraulic braking arrangement according to any of the preceding claims, wherein said power brake valve (5) comprises a first spool (20) and a second spool (20'), each of said spools (20, 20') comprising a first portion (21, 21') configured to control passage of fluid in pressure from said first source (14) to right and left rear brakes (3a, 3b) and a second portion (27, 27') carried by said first portion (21, 21') and configured to generate said at least one hydraulic signal (8a, 8b) directed to said relay valve (10).

8. - Hydraulic braking arrangement according to claim 7, wherein said relay valve (10) comprises a hydraulically actuated valve (33) fluidly interposed between said source (12) and said front brakes (2), said valve (33) being actuated by said at least one hydraulic signal (8a, 8b).

9. - Hydraulic braking arrangement according to claim 8, wherein said power brake valve (5) generates two hydraulic signals (8a, 8b), respectively a first signal (8a) generated by second portion (27) of said first spool (20) and a second signal (8b) generated by second portion (27') of said second spool (20'), said relay valve (10) further comprising a direct shuttle valve (32), said shuttle valve (32) comparing said hydraulic signals (8a, 8b), the greatest of these latter controlling said valve (33).

10. - Hydraulic braking arrangement according to claim 8, wherein said power brake valve (5) generates two hydraulic signals (8a, 8b), respectively a first signal (8a) generated by second portion (27) of said first spool (20) and a second signal (8b) generated by second portion (27') of said second spool (20'), said relay valve (10) further comprising an inverse shuttle valve (32), said shuttle valve (32) comparing said hydraulic signals (8a, 8b), and allowing the control of said valve (33) only when bot signals (8a, 8b) are present.

11. - Hydraulic braking arrangement according to any of the preceding claims, wherein said second source (12) is configured to be fluidly connected to a main pump of said vehicle or to a priority valve of said vehicle.

12. - Hydraulic braking arrangement according to any of the preceding claims, comprising a secondary brake system (40) fluidly connected to said rear brakes (3), said secondary brake system (40) being configured to control said rear brakes (3) in parallel to said power brake valve (5).

13. - Hydraulic braking arrangement according to claim 12, wherein said secondary brake system (40) comprises an accumulator (41) and a control valve (47), said control valve (47) being configured to allow the passage of the fluid contained in said accumulator (41) to said rear brakes (3).

14. - Hydraulic braking arrangement according to claim 11, wherein said control valve (47) is a proportional, mechanically actuated, valve.

15. - Hydraulic braking arrangement according to claim 13, wherein said secondary brake system (40) further comprises a by-pass valve (52) fluidly in parallel with respect to control valve (47), said by-pass valve (52) being electrically actuated.

16. - Hydraulic braking arrangement according to any of claims 13 to 15, wherein said accumulator (41) is recharged by said recharging module (16) by fluidly connecting said accumulator (41) with said second source of fluid in pressure (12) .

## Patentansprüche

1. Hydraulische Bremsanordnung (1) zur Steuerung vorderer und hinterer Bremsen (2, 3) eines Geländefahrzeugs, wobei die Anordnung ein Kraftbremsventil (5) umfasst, das strömungstechnisch zwischen den hinteren Bremsen (3) und einer ersten Quelle (4) von unter Druck stehendem Fluid des Fahrzeuges eingefügt ist und das dazu eingerichtet ist, wahlweise einen Durchfluss von von der ersten Quelle (4) kommendem Fluid zu den hinteren Bremsen (3) zuzulassen, wobei das Kraftbremsventil (5) weiterhin dazu eingerichtet ist, wahlweise mindestens ein hydraulisches Signal (8a, 8b) bereitzustellen, das dazu eingerichtet ist, ein Relaisventil (10) anzusteuern, das strömungstechnisch zwischen den vorderen Bremsen (2) und einer zweiten Quelle (12) von unter Druck stehendem Fluid des Fahrzeugs eingefügt ist und das dazu eingerichtet ist, abhängig von dem mindestens einen hydraulischen Signal (8a, 8b) wahlweise einen Durchfluss von von der zweiten Quelle (12) kommendem Fluid zu den vorderen Bremsen (2) zuzulassen.

2. Hydraulische Bremsanordnung nach Anspruch 1, wobei das Relaisventil (10) den Durchfluss von Fluid von der zweiten Quelle (12) durch Regulieren eines Eingangsdrucks eines solchen Fluids zu den vorderen Bremsen (2) mit einem vorbestimmten Verhältnis, welches proportional zu dem Druck des Steuersignals (8a, 8b) ist, zulässt.

3. Hydraulische Bremsanordnung nach Anspruch 2, wobei das Verhältnis zwischen 1:1 und 1:5 variiert.

4. Hydraulische Bremsanordnung nach Anspruch 1 bis 3, wobei das Kraftbremsventil (5) mechanisch betätigt wird.

5. Hydraulische Bremsanordnung nach einem der vorherigen Ansprüche, wobei die erste Quelle (4) von Fluid mindestens einen Speicher (14', 14") umfasst.

6. Hydraulische Bremsanordnung nach Anspruch 5, weiterhin umfassend ein Auflademodul (16), das dazu eingerichtet ist, den mindestens einen Speicher (14', 14") durch strömungstechnisches Verbinden des Letzteren mit der zweiten Quelle (12) von unter Druck stehendem Fluid wieder aufzuladen.

7. Hydraulische Bremsanordnung nach einem der vorherigen Ansprüche, wobei das Kraftbremsventil (5) eine erste Spule (20) und eine zweite Spule (20') umfasst, wobei jede der Spulen (20, 20') einen ersten Abschnitt (21, 21'), der dazu eingerichtet ist, einen Durchfluss von unter Druck stehendem Fluid von der ersten Quelle (14) zur rechten und linken hinteren Bremse (3a, 3b) zu steuern, und einen zweiten Abschnitt (27, 27') aufweist, der von dem ersten Abschnitt (21, 21') getragen wird und dazu eingerichtet ist, das mindestens eine hydraulische Signal (8a, 8b) zu erzeugen, das an das Relaisventil (10) gerichtet ist.

8. Hydraulische Bremsanordnung nach Anspruch 7, wobei das Relaisventil (10) ein hydraulisch betätigtes Ventil (33) aufweist, das strömungstechnisch zwischen der Quelle (12) und den vorderen Bremsen (2) eingefügt ist, wobei das Ventil (33) von dem mindestens einen hydraulischen Signal (8a, 8b) betätigt wird.

9. Hydraulische Bremsanordnung nach Anspruch 8, wobei das Kraftbremsventil (5) zwei hydraulische Signale (8a, 8b) erzeugt, entsprechend einem ersten Signal (8a), das von dem zweiten Abschnitt (27) der ersten Spule (20) erzeugt wird, und einem zweiten Signal (8b), das von dem zweiten Abschnitt (27') der zweiten Spule (20') erzeugt wird, wobei das Relaisventil (10) weiter ein direktes Wechselventil (32) aufweist, wobei das Wechselventil (32) die hydraulischen Signale (8a, 8b) vergleicht, wobei das größte der Letzteren das Ventil (33) steuert.

10. Hydraulische Bremsanordnung nach Anspruch 8, wobei das Kraftbremsventil (5) zwei hydraulische Signale (8a, 8b) erzeugt, entsprechend einem ersten Signal (8a), das von dem zweiten Abschnitt (27) der erste Spule (20) erzeugt wird, und einem zweiten Signal (8b), das von dem zweiten Abschnitt (27') der zweiten Spule (20') erzeugt wird, wobei das Relaisventil (10) weiterhin ein inverses Wechselventil (32) aufweist, wobei das Wechselventil (32) die hydraulischen Signale (8a, 8b) vergleicht und die Steuerung des Ventils (33) nur zulässt, wenn beide Signale (8a, 8b) vorhanden sind.

11. Hydraulische Bremsanordnung nach einem der vorherigen Ansprüche, wobei die zweite Quelle (12) dazu eingerichtet ist, strömungstechnisch mit einer Hauptpumpe des Fahrzeugs oder einem Prioritätsventil des Fahrzeugs verbunden zu sein.

12. Hydraulische Bremsanordnung nach einem der vorherigen Ansprüche, umfassend ein sekundäres Bremssystem (40), das strömungstechnisch mit den hinteren Bremsen (3) verbunden ist, wobei das sekundäre Bremssystem (40) dazu eingerichtet ist, die hinteren Bremsen (3) parallel zu dem Kraftbremsventil (5) zu steuern.

13. Hydraulische Bremsanordnung nach Anspruch 12, wobei das sekundäre Bremssystem (40) einen Speicher (41) und ein Steuerventil (47) umfasst, wobei das Steuerventil (47) dazu eingerichtet ist, den Durchfluss von Fluid, das in dem Speicher (41) enthalten ist, zu den hinteren Bremsen (3) zuzulassen.

14. Hydraulische Bremsanordnung nach Anspruch 11, wobei das Steuerventil (47) ein mechanisch betätigtes Proportionalventil ist.

15. Hydraulische Bremsanordnung nach Anspruch 13, wobei das sekundäre Bremssystem (40) weiter ein Bypass-Ventil (52) strömungstechnisch parallel bezüglich des Steuerventils (47) umfasst, wobei das Bypass-Ventil (52) elektrisch betätigt wird.

16. Hydraulische Bremsanordnung nach einem der Ansprüche 13 bis 15, wobei der Speicher (41) von dem Auflademodul (16) durch strömungstechnisches Verbinden des Speichers (41) mit der zweiten Quelle (12) von unter Druck stehendem Fluid wieder aufgeladen wird.

## Revendications

1. Dispositif de freinage hydraulique (1) pour commander les freins avant et arrière (2, 3) d'un véhicule tout terrain, ledit dispositif (1) comprenant une soupape de frein assisté (5) interposée fluidiquement entre lesdits freins arrière (3) et une première source (4) de fluide pressurisé dudit véhicule et étant configurée pour permettre sélectivement le passage de fluide provenant de ladite source (4) vers lesdits freins arrière (3), ladite soupape de frein assisté (5) étant configurée en outre pour fournir sélectivement au moins un signal hydraulique (8a, 8b) configuré pour commander une valve relais (10) interposée fluidiquement entre lesdits freins avant (2) et une seconde source (12) de fluide pressurisé dudit véhicule et étant configurée pour permettre sélectivement le passage de fluide provenant de ladite seconde source (12) vers lesdits freins avant (2) en fonction dudit au moins un signal hydraulique (8a, 8b).

2. Dispositif de freinage hydraulique selon la revendication 1, dans lequel ladite valve relais (10) permet le passage de fluide provenant de ladite seconde source (12) en régulant la pression d'entrée d'un tel fluide vers lesdits freins avant (2) avec un rapport prédéterminé qui est proportionnel à la pression desdits signaux pilotes (8a, 8b).

3. Dispositif de freinage hydraulique selon la revendication 2, dans lequel ledit rapport varie de 1:1 à 1:5.

4. Dispositif de freinage hydraulique selon les revendications 1 à 3, dans lequel ladite soupape de frein assisté (5) est actionnée mécaniquement.

5. Dispositif de freinage hydraulique selon l'une quelconque des revendications précédentes, dans lequel ladite première source de fluide (4) comprend au moins un accumulateur (14', 14").

6. Dispositif de freinage hydraulique selon la revendication 5, comprenant en outre un module de recharge (16) configuré pour recharger ledit au moins un accumulateur (14', 14") en reliant fluidiquement ce dernier à ladite seconde source de fluide pressurisé (12).

7. Dispositif de freinage hydraulique selon l'une quelconque des revendications précédentes, dans lequel ladite soupape de frein assisté (5) comprend une première bobine (20) et une seconde bobine (20'), chacune desdites bobines (20, 20') comprenant une première partie (21, 21') configurée pour commander le passage de fluide pressurisé de ladite première source (14) vers les freins arrière gauche et droit (3a, 3b) et une seconde partie (27, 27') portée par ladite première partie (21, 21') et configurée pour générer ledit au moins un signal hydraulique (8a, 8b) dirigé vers ladite valve relais (10).

8. Dispositif de freinage hydraulique selon la revendication 7, dans lequel ladite valve relais (10) comprend une soupape actionnée hydrauliquement (33) interposée fluidiquement entre ladite source (12) et lesdits freins avant (2), ladite soupape (33) étant actionnée par ledit au moins un signal hydraulique (8a, 8b).

9. Dispositif de freinage hydraulique selon la revendication 8, dans lequel ladite soupape de frein assisté (5) génère deux signaux hydrauliques (8a, 8b), respectivement un premier signal (8a) généré par la seconde partie (27) de ladite première bobine (20) et un second signal (8b) généré par la seconde partie (27') de ladite seconde bobine (20'), ladite valve relais (10) comprenant en outre une vanne d'arrêt direct (32), ladite vanne d'arrêt direct (32) comparant lesdits signaux hydrauliques (8a, 8b), le plus grand des deux commandant ladite soupape (33).

10. Dispositif de freinage hydraulique selon la revendication 8, dans lequel ladite soupape de frein assisté (5) génère deux signaux hydrauliques (8a, 8b), respectivement un premier signal (8a) généré par la seconde partie (27) de ladite première bobine (20) et un second signal (8b) généré par une seconde partie (27') de ladite seconde bobine (20'), ladite valve relais (10) comprenant en outre une vanne d'arrêt inverse (32), ladite vanne d'arrêt (32) comparant lesdits signaux hydrauliques (8a, 8b), et permettant la commande de ladite soupape (33) seulement lorsque les deux signaux (8a, 8b) sont présents.

11. Dispositif de freinage hydraulique selon l'une quelconque des revendications précédentes, dans lequel ladite seconde source (12) est configurée pour être fluidiquement reliée à une pompe principale dudit véhicule ou à une soupape de priorité dudit véhicule.

12. Dispositif de freinage hydraulique selon l'une quelconque des revendications précédentes, comprenant un système de frein secondaire (40) relié fluidiquement auxdits freins arrière (3), ledit système de frein secondaire (40) étant configuré pour commander lesdits freins arrière (3) parallèlement à ladite soupape de frein assisté (5).

13. Dispositif de freinage hydraulique selon la revendication 12, dans lequel ledit système de frein secondaire (40) comprend un accumulateur (41) et une vanne de commande (47), ladite vanne de commande (47) étant configurée pour permettre le passage du fluide contenu dans ledit accumulateur (41) vers lesdits freins arrière (3).

14. Dispositif de freinage hydraulique selon la revendication 11, dans lequel ladite vanne de commande (47) est une vanne proportionnelle, mécaniquement actionnée.

15. Dispositif de freinage hydraulique selon la revendication 13, dans lequel ledit système de frein secondaire (40) comprend en outre une vanne de dérivation (52) fluidiquement en parallèle par rapport à la vanne de commande (47), ladite vanne de dérivation (52) étant actionnée électriquement.

16. Dispositif de freinage hydraulique selon l'une quelconque des revendications 13 à 15, dans lequel ledit accumulateur (41) est rechargé par ledit module de recharge (16) en reliant fluidiquement ledit accumulateur (41) à ladite seconde source de fluide pressurisé (12).
